# EUROPÄISCHE PATENTSCHRIFT

(11) **EP 0 856 176 B1**
(45) Veröffentlichungstag und Bekanntmachung des Hinweises auf die Patenterteilung: **05.01.2000**
(21) Anmeldenummer: 96934661.8
(22) Anmeldetag: 11.10.1996
(51) Int. Cl.: G06F 17/30

(54) **DATENBANKMANAGEMENTSYSTEM SOWIE DATENÜBERTRAGUNGSVERFAHREN**
DATABASE MANAGEMENT SYSTEM AND DATA TRANSMISSION PROCESS
SYSTEME DE GESTION DE BANQUE DE DONNEES ET PROCEDE DE TRANSMISSION DE DONNEES

(30) Priorität: 16.10.1995 DE 19538448
(43) Veröffentlichungstag der Anmeldung: 05.08.1998
(73) Patentinhaber: Rustige, Hayno, 74420 Oberrot (DE)
(72) Erfinder: Rustige, Hayno, 74420 Oberrot (DE)
(74) Vertreter: Grünecker, Kinkeldey, Stockmair & Schwanhäusser Anwaltssozietät
(86) Internationale Anmeldenummer: EP9604448
(87) Internationale Veröffentlichungsnummer: WO9715016

(56) Entgegenhaltungen:
- EP-A- 0 336 586
- IBM SYSTEMS JOURNAL, Bd. 33, Nr. 2, 1.Januar 1994, Seiten 239-263, XP000450285 SCHLATTER M ET AL: "THE BUSINESS OBJECT MANAGEMENT SYSTEM"
- C.J. DATE: "An Introduction to Database Systems" , 01-03-1995, ADDISON-WESLEY PUBLISHING COMPANY,

## Beschreibung

Die vorliegende Erfindung betrifft ein Datenbankmanagementsystem sowie ein Verfahren zur Übertragung unterschiedlicher Arten von Datensätzen.

Derzeit übliche Datenbanken arbeiten in der Regel relational, d.h. eine Verknüpfung von Daten, die in unterschiedlichen Tabellen abgelegt sind, erfolgt über das Definieren sogenannter Schlüsselfelder, durch die Verbindungen zwischen Datensätzen, die in unterschiedlichen Tabellen abgelegt sind, hergestellt werden können. Solche Datenbanken sind bereits aus dem Dokument "An Introduction to Database Systems", C.J. DATE, Märr 1995, Seiten 52-62, bekannt.

Das Vorsehen einer Vielzahl unterschiedlicher Tabellen oder "Files" innerhalb einer Datenbank sowie deren Verknüpfung über Schlüssel felder führt bei einer großen Anzahl unterschiedlicher Tabellen zu einer komplizierten Struktur der Datenbank, durch die die Arbeit mit der Datenbank erschwert wird.

Des weiteren besteht bei der Übertragung von Datensätzen zwischen einem Sender und einem Empfänger die Schwierigkeit, daß der Empfänger in der Lage sein muß, die Art und Struktur der einzelnen übertragenen Datensätze richtig zu erfassen, so daß die einzelnen empfangenen Datensätze nach einer eventuell notwendigen Umstrukturierung in einer dafür geeigneten Tabelle gespeichert werden können.

Es ist die Aufgabe der vorliegenden Erfindung, ein Datenbankmanagementsystem sowie ein Verfahren zur Übertragung unterschiedlicher Arten von Datensätzen anzugeben, mit denen die genannten Probleme beseitigt werden können.

Diese Aufgabe wird in erfindungsgemäßer Weise durch den Gegenstand des Anspruches 1 sowie den Gegenstand des Anspruches 5 gelöst.

Bevorzugte Ausgestaltungen der Erfindung sind Gegenstand der Unteransprüche.

Dem vorgeschlagenen Datenbankmanagementsystem liegt die Erkenntnis zugrunde, daß es ungünstig ist, unterschiedliche Arten von Datensätzen, wie beispielsweise Buchhaltungsdaten, Bestelldaten, Adreßdaten etc. in unterschiedlichen Tabellen abzuspeichern, wobei eine Verbindung zwischen den einzelnen Datensatzarten nur über die songenannten Schlüsselfelder erzielt werden kann. Gemäß der vorliegenden Erfindung wird daher vorgeschlagen, lediglich eine einzige einheitliche Tabelle zur Speicherung aller unterschiedlichen Datensatzarten vorzusehen. Damit trotz der gemeinsamen Abspeicherung innerhalb einer einzigen Tabelle für jeden Datensatz erkannt werden kann, welche Art von Information in den entsprechenden Feldern abgelegt ist, weist jeder Datensatz ein Definitionsfeld auf, das Aufschluß über die für einen bestimmten Datensatz innerhalb der Tabelle gültigen Felder sowie über die darin abgelegten Informationsarten zuläßt.

Vorzugsweise werden, bildlich ausgedrückt, einzelnen Spalten der Tabelle bestimmte allgemeine Informationsarten zugewiesen, so daß Felder unterschiedlicher Datensatzarten, die sich jedoch gemeinsam auf eine bestimmte allgemeine Informationsart beziehen, in derselben Spalte der Tabelle gespeichert werden. Somit ist es nicht unbedingt erforderlich, daß über das Definitionsfeld eines Datensatzes jedes einzelne Feld vollständig beschrieben wird, sondern es ist möglich, bereits aus der Zuordnung eines bestimmten Feldes eines Datensatzes zu einer bestimmten Spalte der Tabelle beim Auslesen des Datensatzes Rückschlüsse auf die in dem bestimmten Feld abgelegte Informationsart zu treffen.

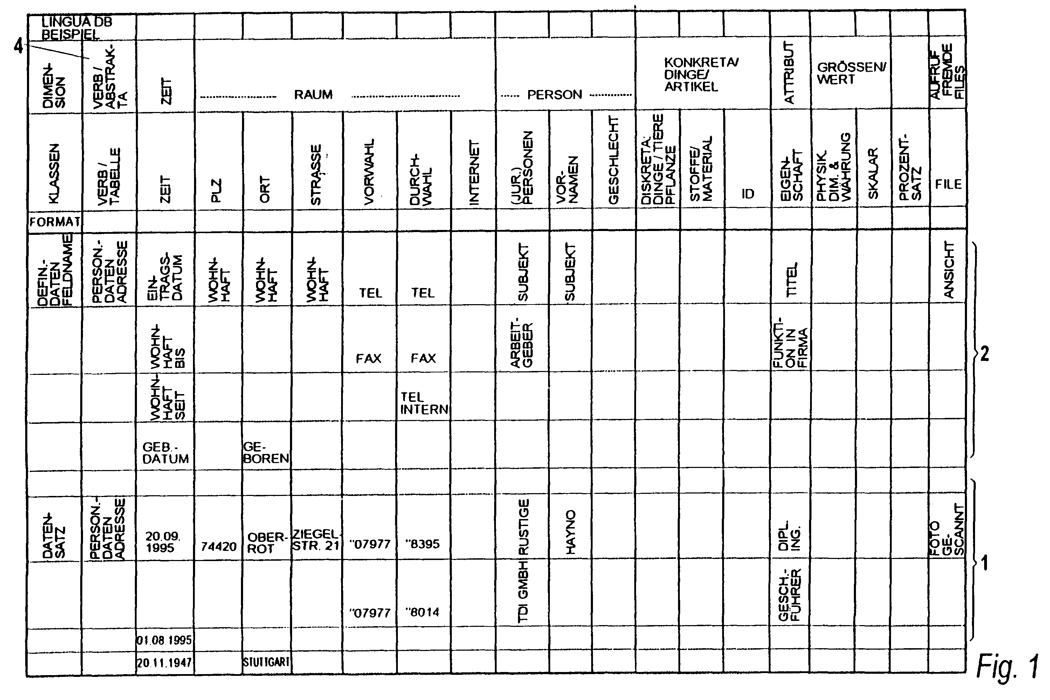

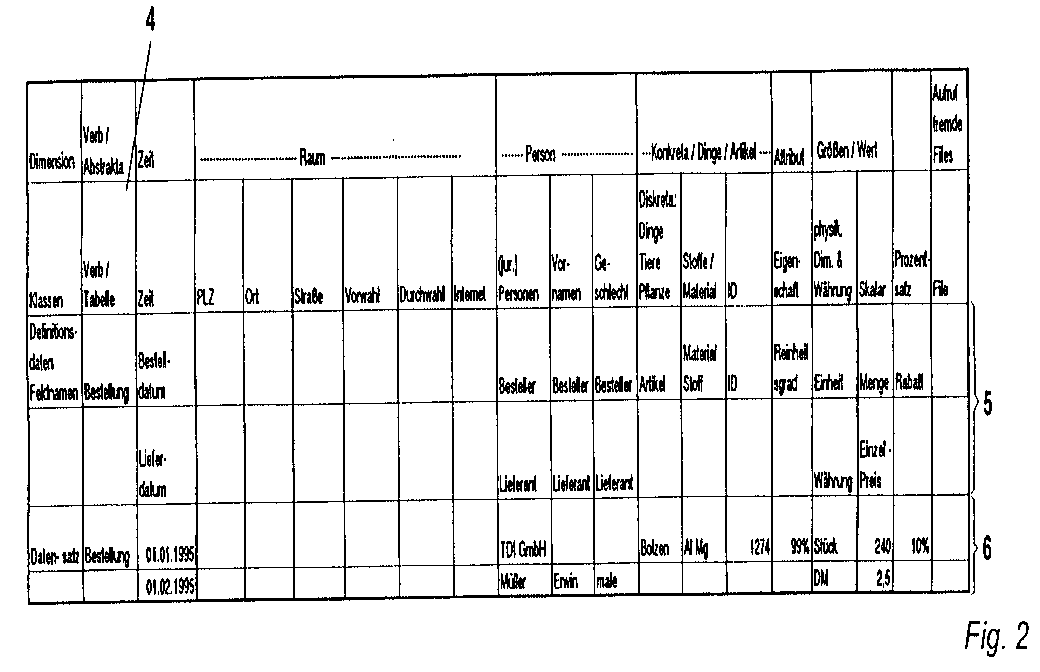

Vorzugsweise sind auch die einzelnen Datensätze organisatorisch in mehrere Spalten so strukturiert, daß die Felder innerhalb einer Spalte eines Datensatzes einer gemeinsamen allgemeinen Informationsart, wie Zeit, Person, Ort, etc. zugewiesen sind. Eine genauere Feldvereinbarung für die Felder einer derartigen Spalte erfolgt dann wiederum über das Definitionsfeld. Dies wird anhand der Figuren 1 und 2 noch näher erläutert.

Vorzugsweise stellt das Definitionsfeld, das in dem im folgenden beschriebenen Ausführungsbeispiel als "Verb" bezeichnet ist, lediglich einen Verweis auf einen Eintrag in einer weiteren Tabelle dar, in welchem die vollständige Feldbeschreibung für den entsprechenden Datensatz abgelegt ist. Es ist dabei jedoch auch möglich, daß diese von dem Definitionsfeld adressierte Feldvereinbarungsinformation wiederum einen Datensatz der einheitlichen Tabelle darstellt.

Auch kann die für das Datenbankmanagementsystem notwendige Steuerinformation in Form von Datensätzen in der einheitlichen Tabelle abgelegt werden, so daß die sonst üblicherweise für die Steuerung notwendigen zusätzlichen Tabellen vermieden werden. Des weiteren können auch Suchkriterien in Form von Datensätzen in der einheitlichen Tabelle gespeichert werden.

Gemäß dem angegebenen Übertragungsverfahren werden unterschiedliche Datensatzarten jeweils mit die entsprechende Datensatzart kennzeichnenden Definitionsfelddaten übertragen. Diese Definitionsfeldarten müssen, soweit sie nicht bereits vorhanden sind, vor der Übertragung für jeden einzelnen Datensatz generiert werden. Am Empfänger kann durch Auswerten der entsprechenden Definitionsfeldarten jeder einzelne Datensatz bezüglich seiner Struktur, d.h. beispielsweise bezüglich der Anzahl der Felder sowie bezüglich den in den einzelnen Feldern abgelegten Informationsarten analysiert und anschließend abgespeichert werden. Die Abspeicherung erfolgt dabei vorzugsweise wiederum in einer einheitlichen Tabelle, so daß unterschiedliche Datensatzarten in dieser einheitlichen Tabelle gemeinsam abgespeichert werden. Dazu wird vor der Abspeicherung ein entsprechendes Definitionsfeld auf Grundlage der zu einem bestimmten Datensatz gehörenden Definitionsfelddaten erzeugt, soweit hierfür die Definitionsfelddaten nicht bereits selbst verwendet werden können. Vorzugsweise erfolgt die Abspeicherung in einer Art, wie sie weiter oben in bezug auf das Datenbankmanagementsystem beschrieben wurde.

Besonders bevorzugterweise stellen die übertragenen Datensätze selbst bereits die für die Speicherung in der einheitlichen Tabelle geeigneten Datensätze dar.

Zum besseren Verständnis der vorliegenden Erfindung wird unter Bezugnahme auf die beiliegenden Figuren 1 und 2 anhand beispielhafter Datensätze erläutert, wie unterschiedliche Arten von Datensätzen in einer einheitlichen Tabelle abgespeichert werden können.

In Figur 1 ist mit Bezugszeichen 1 ein Beispiel für einen Adreßdatensatz angegeben.

Die Bedeutung der einzelnen belegten Felder ergibt sich aus der mit Bezugszeichen 2 angegebenen Feldvereinbarung. Die Feldvereinbarung wird durch das mit "Verb/Abstrakta" bezeichnete Definitionsfeld 4 bestimmt. Somit kann bei einem Datensatz 1, der zusätzlich ein Definitionsfeld 4 aufweist, stets erkannt werden, welche Informationsarten auf den einzelnen Feldpositionen des Datensatzes gespeichert sind.

In Figur 2 ist mit der Bezugsziffer 5 eine andere Feldvereinbarung angedeutet. Ersichtlicherweise handelt es sich um eine Feldvereinbarung, die für einen Auftragsdatensatz geeignet ist.

Der eigentliche Datensatz, für den diese Feldvereinbarung gültig ist, ist mit Bezugsziffer 6 bezeichnet.

Ersichtlicherweise weist der Datensatz 6 eine vollständig unterschiedliche Feldbelegung gegenüber dem Datensatz 1 auf, wobei auch Felder an gleichen Positionen unterschiedliche Informationsarten speichern können. Zu erkennen ist jedoch, daß bei den in Spalten organisierten Datensätzen eine Grobgliederung in Zeit, Raum, Person, etc. gegeben ist und die Felder jedes Datensatzes entsprechend diesen Kriterien geordnet sind. Diese Grobgliederung betrifft auch die Spalten der einheitlichen Tabelle. Eine bestimmte allgemeine Informationsart, wie beispielsweise "Raum", kann dabei in entsprechende Unterkriterien, wie Postleitzahl, Ort, Straße, Vorwahl etc. unterteilt sein. Wenn ein Datensatz, wie der Datensatz 1 in Figur 1, in der einheitlichen Tabelle abgespeichert ist, läßt sich bereits anhand der besetzten Feldpositionen erkennen, um welche allgemeine Informationsart es sich bei jedem einzelnen Feldeintrag handelt. Die genaue Feldvereinbarung läßt sich jedoch erst durch Auswerten des Definitionsfeldes 4 erkennen. Vorzugsweise ist das Definitionsfeld 4 lediglich mit einem "Pointer" belegt, der wiederum auf einen Tabelleneintrag verweist, aus dem sich die exakten Feldvereinbarungen für den entsprechenden Datensatz ergeben.

## Patentansprüche

1. Datenbankmanagementsystem zur Verwaltung der Speicherung von Daten, wobei Datensätze in einer Tabellenspeichereinrichtung gespeichert werden, **dadurch gekennzeichnet,** daß Datensätze, die eine voneinander abweichende Anzahl belegter Felder sowie unterschiedliche Vereinbarungen für die belegten Felder aufweisen können, in der Tabellenspeichereinrichtung in der Struktur einer einheitlichen Tabelle gespeichert sind und jeder Datensatz ein Definitionsfeld aufweist, das die für den jeweiligen Datensatz gültigen Felder innerhalb der einheitlichen Tabelle sowie die für die gültigen Felder festgelegten Feldvereinbarungen kennzeichnet, wobei den einzelnen Spalten der einheitlichen Tabelle bestimmte allgemeine Informationsarten zugewiesen sind, derart, daß Felder von unterschiedlichen Datensatzarten, die gemeinsam eine bestimmte allgemeine Informationsart betreffen, in derselben Spalte der Tabelle enthalten sind.

2. Datenbankmanagementsystem nach Anspruch 1, **dadurch gekennzeichnet,** daß der Eintrag im Definitionsfeld eines Datensatzes auf einen Informationsdatensatz verweist, der die vollständige Information bezüglich der für den Datensatz gültigen Feldvereinbarung aufweist.

3. Datenbankmanagementsystem nach Anspruch 2, **dadurch gekennzeichnet,** daß der Informationsdatensatz, auf den verwiesen wird, ein in der einheitlichen Tabelle abgelegter Datensatz ist.

4. Datenbankmanagementsystem nach einem der Ansprüche 1 bis 3, **dadurch gekennzeichnet**, daß auch die für den Betrieb des Datenbankmanagementsystems notwendige Steuerinformationen in Form von Datensätzen in der einheitlichen Tabelle gespeichert werden.

5. Verfahren zur Übertragung von unterschiedlichen Arten von Datensätzen mit folgenden Schritten:
Generieren von Definitionsfelddaten für jeden zu übertragenden Datensatz, durch die die in dem entsprechenden Datensatz enthaltenen Felder bezüglich der darin abgelegten Informationsart gekennzeichnet sind;
Übertragen der Datensätze mit den entsprechenden Definitionsfelddaten,
Empfangen der übertragenen Daten und Abspeichern der unterschiedlichen Arten von Datensätzen in einer einheitlichen Tabelle, wobei für jeden Datensatz basierend auf den entsprechenden Definitionsfelddaten ein Definitionsfeld abgeleitet wird, das zusammen mit dem entsprechenden Datensatz in der einheitlichen Tabelle gespeichert wird und das die innerhalb der einheitlichen Tabelle für den entsprechenden Datensatz gültigen Felder sowie die darin abgelegten Informationsarten kennzeichnet.

6. Verfahren nach Anspruch 5, **dadurch gekennzeichnet,** daß ein zu übertragender Datensatz einschließlich der entsprechenden Definitionsfelddaten bereits einen zur Speicherung in der einheitlichen Tabelle geeigneten Datensatz darstellt.

7. Verfahren nach Anspruch 6, **dadurch gekennzeichnet,** daß unter den zu übertragenden und zur Speicherung in der einheitlichen Tabelle geeigneten Datensätzen ein Datensatz enthalten ist, der die Übertragungsspezifikationen enthält.

## Claims

1. A database management system for managing the storage of data, with data sets being stored in a table storage means, **characterized in** that data sets which can have a varying number of occupied fields and different declarations for said occupied fields are stored in the table storage means in the structure of a common table, and each data set has a definition field which within the common table characterizes the fields valid for the corresponding data set, as well as the field declarations established for the valid fields, with particular general types of information being allocated to the individual columns of the common table, so that fields of different types of data sets, which jointly relate to a particular general information type, are stored in the same column of the table.

2. The database management system according to claim 1, **characterized in** that the entry in the definition field of a data set refers to an information data set which contains the complete information with respect to the field declaration that is valid for the data set.

3. The database management system according to claim 2, **characterized in** that the information data set referred to is a data set stored in the common table.

4. The database management system according to any one of claims 1 to 3, **characterized in** that the control information required for the operation of the database management system is stored in the form of data sets in the common table.

5. A method of transmitting different types of data sets, comprising the following steps:
generating definition field data for each data set to be transmitted, by which definition field data the fields contained in the corresponding data set are characterized with respect to the information type stored therein,
transmitting the data sets with the corresponding definition field data,
receiving the transmitted data and storing the different types of data sets in a common table, with a definiton field being derived for each data set, based on the corresponding definition field data, and the definition field being stored together with the corresponding data set in the common table and characterizing the fields valid for the corresponding data set within the common table, as well as the types of information stored therein.

6. The method according to claim 5, **characterized in** that a data set to be transmitted, including the corresponding definition field data, already represents a data set suited for storage in the common table.

7. The method according to claim 6, **characterized in** that among the data sets which are to be transmitted and are suited for storage in the common table, there is a data set which contains the transmission specifications.

## Revendications

1. Système de gestion de banques de données pour gérer la mise en mémoire de données, des enregistrements étant stockés dans un dispositif de mise en mémoire à table, **caractérisé** en ce que des enregistrements qui peuvent présenter un nombre différent de champs occupés et des déclarations différentes pour les champs occupés sont stockés dans le dispositif de mise en mémoire à table sous la forme d'une table unifiée, et chaque enregistrement a un champ de définition qui identifie les champs valables pour l'enregistrement, à l'intérieur de la table unifiée, ainsi que les déclarations de champ fixées pour les champs valables, étant précisé que des types d'informations généraux définis sont affectés aux colonnes individuelles de la table unifiée, de telle sorte que des champs de types d'enregistrement différents qui concernent conjointement un type d'information général défini soient contenus dans la même colonne de la table.

2. Système de gestion de banques de données selon la revendication 1, **caractérisé** en ce que l'inscription dans le champ de définition d'un enregistrement renvoie à un enregistrement d'information qui présente l'information complète concernant la déclaration de champ valable pour l'enregistrement.

3. Système de gestion de banques de données selon la revendication 2, **caractérisé** en ce que l'enregistrement d'information auquel on renvoie est un enregistrement déposé dans le tableau unifié.

4. Système de gestion de banques de données selon l'une des revendications 1 à 3, **caractérisé** en ce que les informations de commande nécessaires à l'exploitation du système de gestion de banques de données sont stockées elles aussi sous la forme d'enregistrements dans le tableau unifié.

5. Procédé pour transférer des types différents d'enregistrements, prévoyant les étapes suivantes :
production, pour chaque enregistrement à transférer, de données de champ de définition grâce auxquelles les champs contenus dans l'enregistrement correspondant sont identifiés quant au type d'information qui y est déposé ;
transfert des enregistrements avec les données de champ de définition correspondantes ;
réception des données transférées et mise en mémoire des différents types d'enregistrements dans une table unifiée, étant précisé que pour chaque enregistrement est défini, à partir des données de champ de définition correspondantes, un champ de définition qui est stocké avec l'enregistrement correspondant dans la table unifiée et qui identifie les champs valables pour l'enregistrement correspondant, à l'intérieur du tableau unifié, ainsi que les types d'information qui y sont déposés.

6. Procédé selon la revendication 5, **caractérisé** en ce qu'un enregistrement à transférer, avec les données de champ de définition correspondantes, constitue déjà un enregistrement approprié pour le stockage dans la table unifiée.

7. Procédé selon la revendication 6, **caractérisé** en ce que parmi les enregistrements à transférer et aptes à être stockés dans la table unifiée est contenu un enregistrement qui contient les spécifications de transfert.
